Europäisches Patentamt

European Patent Office

Office européen des brevets

(11) Publication number: **0 299 539 B1**

## EUROPEAN PATENT SPECIFICATION

(45) Date of publication of patent specification: **29.07.92**   (51) Int. Cl.⁵: **B23P  19/02**

(21) Application number: **88111679.2**

(22) Date of filing: **21.01.85**

(60) Publication number of the earlier application in accordance with Art.76 EPC: **0 152 778**

(54) Apparatus for sleeving damaged tubes of a nuclear steam generator.

(30) Priority: **14.02.84 US 580038**

(43) Date of publication of application:
**18.01.89 Bulletin  89/03**

(45) Publication of the grant of the patent:
**29.07.92 Bulletin  92/31**

(84) Designated Contracting States:
**BE CH DE FR GB IT LI SE**

(56) References cited:
**FR-A- 2 529 109**
**GB-A- 757 617**
**US-A- 4 329 769**

(73) Proprietor: **WESTINGHOUSE ELECTRIC COR-
PORATION**
**Westinghouse Building Gateway Center**
**Pittsburgh Pennsylvania 15222(US)**

(72) Inventor: **Cooper, Frank William, Jr.**
**115 Himalaya Road**
**Monroeville Pennsylvania 15146(US)**
Inventor: **Howard, Bruce Arthur**
**9110 118th Way**
**Seminole Florida 33540(US)**

(74) Representative: **Patentanwälte Dipl.-Ing. R.
Holzer Dipl.-Ing. (FH) W. Gallo
Ludwigstrasse 26
W-8900 Augsburg(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention generally relates to the nuclear-reactor art. It has particular relationship to the repair of the damaged, cracked or corroded tubes, of a steam generator of a nuclear-reactor plant. As known in prior art, the repair of the damaged tubes is effected by inserting sleeves in the tubes and providing metallically sealed joints between the sleeves and the sleeved tubes. To carry out this operation, an operator must usually enter the channel head of the steam generator and set the sleeves for a sleeving operation. The environment within the channel head is radioactive. Extensive studies have shown that the task which the operator must perform during sleeve insertion renders this process the most radiation-exposure-intensive operation within the overall sleeving process. In one particular process, the sleeve blanks are inserted in the tubes one at a time. While such process is generally highly satisfactorily, its ability to carry out only one sleeve insertion operation at a time constitutes a disadvantage.

This is because for each sleeving operation an operator must expose himself to radioactivity by entering the channel head to position a sleeve blank and the mandrel on a sleeve inserter apparatus and otherwise to adjust or to set the sleeve inserter apparatus, thus, requiring repeated entering the channel head for inserting a number of sleeve blanks into corresponding damaged tubes.

A sleeving apparatus for performing the task explained above is known, for example, from FR-A-25 29 109 with a specific view of the difficulty of inserting relatively long sleeve blanks into tubes disposed at the radially outer region of a tube sheet with very limited vertical height underneath the tube sheet. However, this prior art sleeving apparatus allows for one sleeve blank insertion at a time only and also suffers from the problem of requiring an operator entering the channel head for each individual sleeve blank to be inserted, with the corresponding radioactivity exposure problem.

It is therefore the object of the present invention to minimize the exposure of personnel to radioactivity on the sleeving of damaged, cracked or corroded tubes of a steam generator of a nuclear reator plant and to provide apparatus for accomplishing this purpose.

With this object in view, the invention resides in an apparatus for sleeving a plurality of damaged tubes as defined in claim 1, and as further characterized in the subclaims.

With the apparatus according to the present invention, there does no longer exist the need for an operator to enter the channel head for each individual sleeving operation. A plurality of sleeve blanks is loaded into a removable turret of the apparatus according to the invention allowing to perform a corresponding plurality of sleeve blank insertions into corresponding damaged tubes. In this manner, exposure of personnel to radioactivity is considerably minimized and the efficiency of the sleeving work is correspondingly increased.

The use of a turret device in the channel head space is known per se from US-A-4 329 769 which discloses an apparatus for performing machining operations at the holes and tubes of a tubesheet. The turret of that prior art machining apparatus has tool holders at opposite ends thereof each adapted to hold a plurality of tools, with all the tools being aligned in a row, and the purpose of the turet is to allow rotation of that row of tools by 90 degrees so as to allow machining of tube rows extending in the x-direction or in the y-direction of an x-y-tube pattern as well.

In a preferred embodiment described herein, a cartridge sleeve blank loader is provided which limits the exposure of personnel to radioactivity and also materially increases productivity. The cartridge sleeve blank loader includes a main framework. A sleeve blank turret or drum is readily positioned on, and readily removable from the framework in a short time. The turret has a plurality of receptacles typically as many as 24 in which about 22 sleeve blanks are typically loaded. The framework also supports a sleeve blank lifter which includes a vertically movable carriage carrying a lift bar. The carriage is driven vertically, typically by a low voltage electric motor, through a screw and ball nut. The lift bar engages the sleeve blank in a receptacle at a loading position and inserts the sleeve blank into a tube below which the lifted sleeve blank is centered. Successive receptacles, each carrying a sleeve blank, are indexed into the inserted position of the turret and inserted into corresponding tubes.

Typically, the sleeve blanks are composed of INCONEL (trademark) alloy. Typical sleeve blanks that are in use are a bimetallic sleeve blank composed of INCONEL 625 and INCONEL 690 annuli and a sleeve blank composed only of INCONEL 690 or INCONEL 600 (trade names). The lengths of the sleeve blanks are typically 90 cm, 1 meter or 105 cm (36", 40" or 42"). The cartridge sleeve-blank loader in accordance with this invention does not include an expander. Friction between the sleeve and the sleeved tube is relied upon to hold the sleeve when the lifter is retracted. The sleeve blanks are, in the practice of this invention, slightly curved or bowed. Typically, a bimetallic sleeve blank 1 meter (40") long is bowed by 2 mm ± 0.5 mm at the longitudinal center or at the point of maximum departure from linearity. A sleeve blank 1 meter (40") long of INCONEL 690 alone is typically bowed 1.5 mm ± 0.5 mm at the longitudinal center or at the point of maximum departure from linearity. The tubes which are sleeved are linear so that when a bowed sleeve blank is thrust into a tube, the tube exerts a force tending to straighten the sleeve blank. The sleeve then exerts a restoring force against the wall of the sleeved tube so that the sleeve is firmly held in the tube and does not fall out when the lift bar is retracted. To preclude damage to a sleeve blank by axial or lateral contact with the tube sheet, the sleeve blank is initially advanced towards the tube sheet by the lifter at a low speed, typically 25 mm to 75 per second. Once the sleeve blank enters the tube, the speed is substantially increased, typically to 100 mm to 150 mm per second.

The cartridge sleeve-blank loader may be mounted on a coordinate transport; the loader may be provided with lockpins which are engaged in tubes that are so located near the tube to be sleeved that a sleeve blank in the sleeving position would be centered under the tube to be sleeved. The tubes may be regarded as arrayed in rows and columns or lines. Typically, the tubes in the rows may be aligned. Each set directly along a column or the tubes in each row may be staggered with respect to the tubes in the just preceding and/or just succeeding row. The lockpins are adjustable so that the center line between the axes of the pins are parallel to the rows where the tubes are not staggered and parallel to the columns where the tubes are staggered. The coordinate transport has the facility for affording precise setting of the sleeve-blank loader as its carriage is moved from position to position for successive sleeving of tubes with the sleeves in the turret. In the practice of this invention, the turret is loaded with sleeve blanks in an assembly area outside of the radioactive channel head. An operator or attendant then enters the channel head and quickly removes an empty turret whose sleeve blanks have been inserted from a cartridge sleeve-blank loader mounted on the coordinate transport. The loaded turret is then handed to the attendant and he quickly installs the loaded turret in the cartridge loader, sets the loader for unloading the loaded turret and leaves the channel head. A handle assembly uniquely suitable for quick positioning of a turret in the sleeve-blank loader is provided.

A more detailed understanding of the invention may be had from the following description of a preferred embodiment, given by way of example and to be studied in conjunction with the accompanying drawing wherein:

Figure 1 is a view in longitudinal section of apparatus in accordance with an embodiment of this invention.

Figure 2 is a view in transverse section taken along line II-II of Fig. 1;

Fig. 2A is a fragmentary view taken in the direction IIA-IIA of Fig. 2 showing a feature of the handle with which the cartridge in Fig. 1 is provided;

Fig. 3 is a partial plan view taken in the direction III-III of of Fig. 1;

Fig. 4 is a fragmental view in side elevation taken in the direction IV-IV of Fig. 3;

Fig. 5 is a fragmental view in longitudinal section taken in the direction V-V of Fig. 3;

Fig. 6 is a fragmental view in longitudinal section taken in the direction VI-VI of Fig. 2;

Fig. 7 is a fragmental view in side elevation showing the gear box of the apparatus according to this invention;

Fig. 8 is a view in transverse section taken along line VIII-VIII of Fig. 7;

Fig. 9 is a fragmentary view in longitudinal section taken along line IX-IX of Fig. 8;

Fig. 10 is a fragmentary view in longitudinal section taken along line X-X of Fig. 8;

Fig. 11 is a fragmentary view in longitudinal section taken along line XI-XI of Fig. 8;

Fig. 12 is a block diagram showing the manner in which the lifter controls the turret drive;

Fig. 13 is a view in side elevation of a sleeve blank used in the practice of this invention;

Fig. 14 is a plan view of a handle assembly for transferring the turret to the channel head and for readily, quickly, and properly positioning the turret in operating position on the cartridge sleeve-blank loader;

Fig. 15 is a view in side elevation of the handle assembly taken in the direction XV-XV of Fig. 14;

Fig. 16 is a view in end elevation of the handle assembly taken in the direction XVI-XVI of Fig. 15; and

Fig. 17 is a plan view of the bottom of the handle assembly taken in the direction XVII-XVII of Fig. 16.

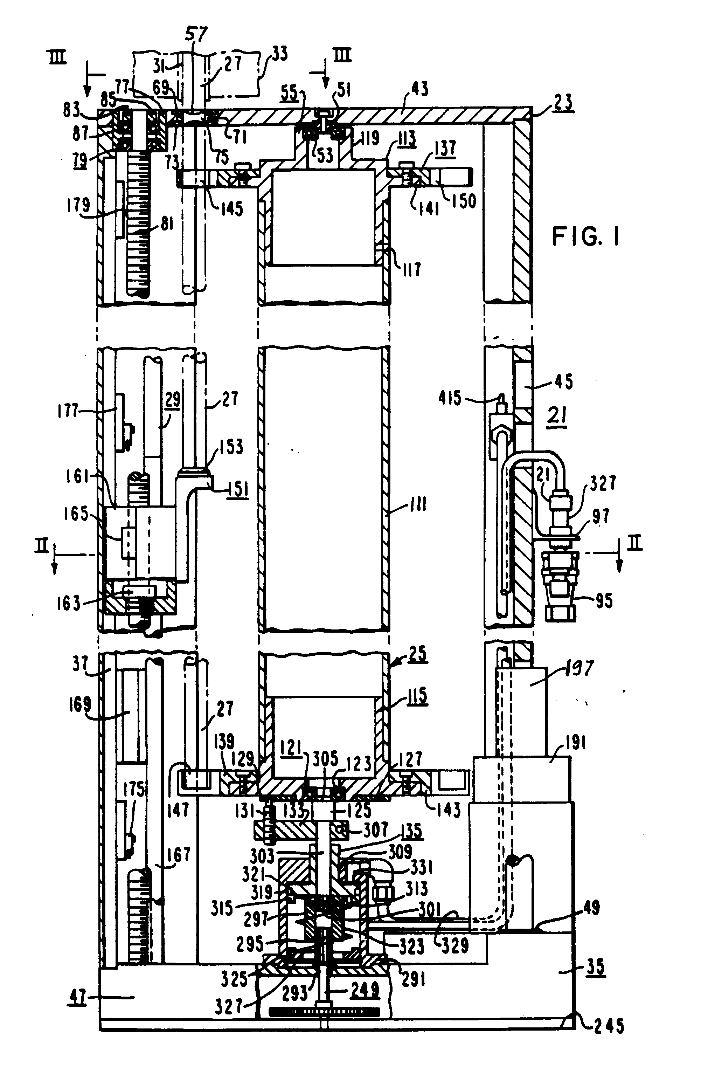

The apparatus shown in the drawings is a cartridge sleeve-blank loader 21. The sleeve-blank loader includes a supporting framework 23, a readily removable and replaceable turret or drum 25 for the sleeve blank 27, a lifter 29 for raising the sleeve blanks 27 and inserting them into cracked or corroded or otherwise damaged tubes 31 in the tube sheet 33 of a steam generator of a nuclear-reactor plant and a drive 35 for the lifter 29 and for indexing the turret 25. In Fig. 1 a part of a sleeve blank 27 is shown in Fig. 1 in the turret in broken lines on the right and a sleeve blank is also shown in broken lines on the lifter 29 which is partly raised.

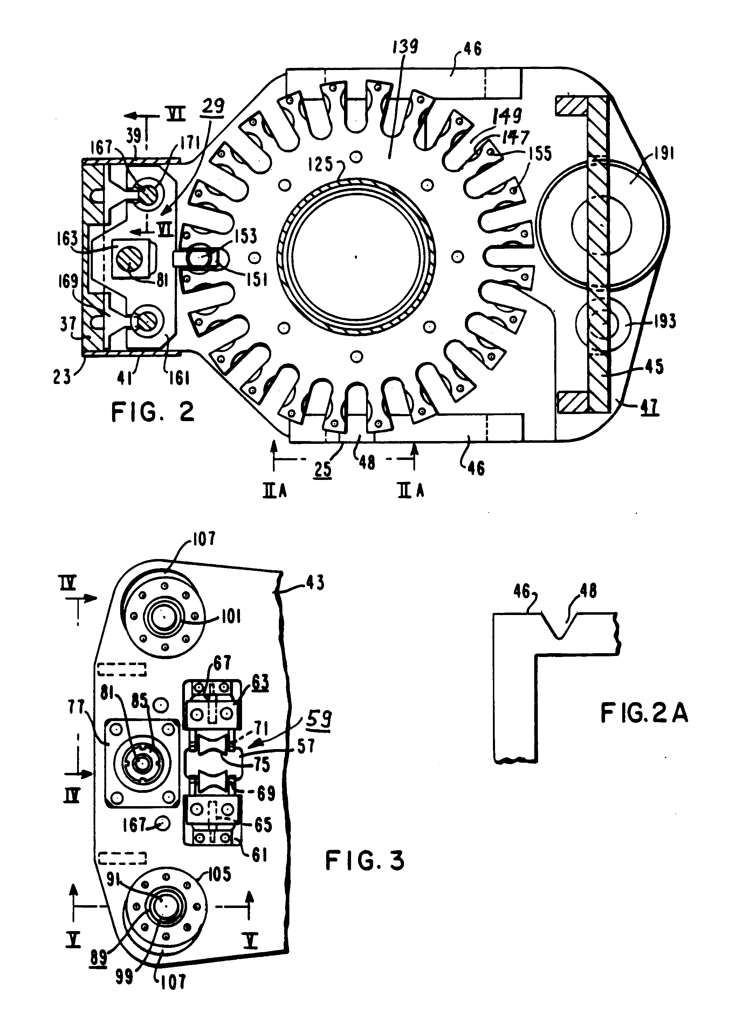

The framework 23 includes a front plate 37, side plates 39 and 41 (Fig. 2), a top plate 43 and a rear plate 45. The framework 23 is seated on the gearbox assembly 47 of the drive 35. The top cover 49 is secured to the back plate 45. As shown in Fig. 2 the front plate 37 and the side plates 39 and 41 of the framework 23 form a cavity which encloses the lifter 29 on three sides. The turret 25 extends rearwardly of this part of the framework from the open side to the rear plate 45. The sleeve-blank inserting position of the turret 25 is centered outwardly of this opening (Fig. 2). Handles 46 (Figs. 2, 3) for manipulating the sleeve-blank loader 21 are supported on the cover 49 of the gearbox assembly 47 a short distance above the cover. Each handle has a V-groove 48 (Fig. 2A) which serves in the ready positioning of a turret 25 in the loader 21.

At the center of the top plate, the upper pivot 51 for the turret 25 is secured. The pivot 51 has a shoulder which seats the inner race 53 of the upper thrust bearing 55 of the turret 25 when the turret is properly positioned in the apparatus.

The top plate 43 also has an opening 57 (Fig. 3) through which the sleeve blanks 27 are thrust by the lifter 29. Upwardly of the top plate 43, a roller guide assembly 59 for the sleeve blanks extends over the opening 57. The assembly 59 includes oppositely disposed brackets 61 secured to the top plate 43. On each bracket a clevis 63 is slidably mounted. Each clevis 63 is connected to its bracket 61 by a dowel pin 65 which permits horizontal movement of the clevis. There is a coil spring 67 about each pin 65. The coil spring 67 engages opposite surfaces of the bracket 61 and clevis 63 urging the clevis inwardly towards the opening 57. A bearing pin 69 is secured by dowel pins 71 to the arms 73 of each clevis 63. Grooved rollers 75 are rotatable on the bearings. The sleeve blank 27 as it is passed through opening 57 is firmly engaged and guided by the rollers 75 as they are urged towards each other by the springs 67.

A hollow-flanged bracket 77 (Fig. 3) extends into an opening in the top plate 43 centrally disposed with respect to the front plate. The bracket 77 is secured to the top plate 43. Tapered roller bearings 79 (Fig. 1) for the drive screw 81 of the lifter 29 extend into bracket 77. The bearings 79 are secured between a shoulder on the screw 81 and a lock washer 83 held by a bearing screw 85 against the rotating race 87 of the upper bearing.

Lockpin assemblies 89 are suspended from the top plate 43 symmetrically with respect to the center line perpendicular to the front plate 37. Each lockpin assembly 89 includes a lockpin 91 (Fig. 5) movable upwardly into a selected tube 31, properly positioned with respect to a tube to be sleeved, and retractable downwardly by a piston not shown in a cylinder 93. The hydraulic fluid for moving the piston is supplied through a fitting 95 (Fig. 1). The fitting 95 is suspended from an angle bracket 97 connected to the back plate 45. The cylinder 93 is suspended from a flanged support 99 screwed into a flanged sleeve 101 secured to top plate 43 by locating pins 103 in the underside of the plate. The flanged sleeve 101 is screwed into a ring 105 appropriately positioned in the oval cavity 107 (Fig. 3) in the top plate. Two sets of locating holes for the pins 103 are provided. With the pins 103 in one set of holes, the ring 105 is seated in the left-hand end of the cavity with reference to Fig. 3 as shown. With the pins 103 in the other set, the ring 105 is seated in the right-hand end of the cavity 107 with reference to Fig. 3. Again referring to fig. 5, the member 99 and the cylinder 93 suspended from it are locked to the sleeve 101 and the top plate 43 by a nut 109 screwed onto the member 99 and firmly engaging the flange of the sleeve 101. The holes 110 serve for engagement by a wrench to disconnect the lockpin assembly 89 from the plate 43.

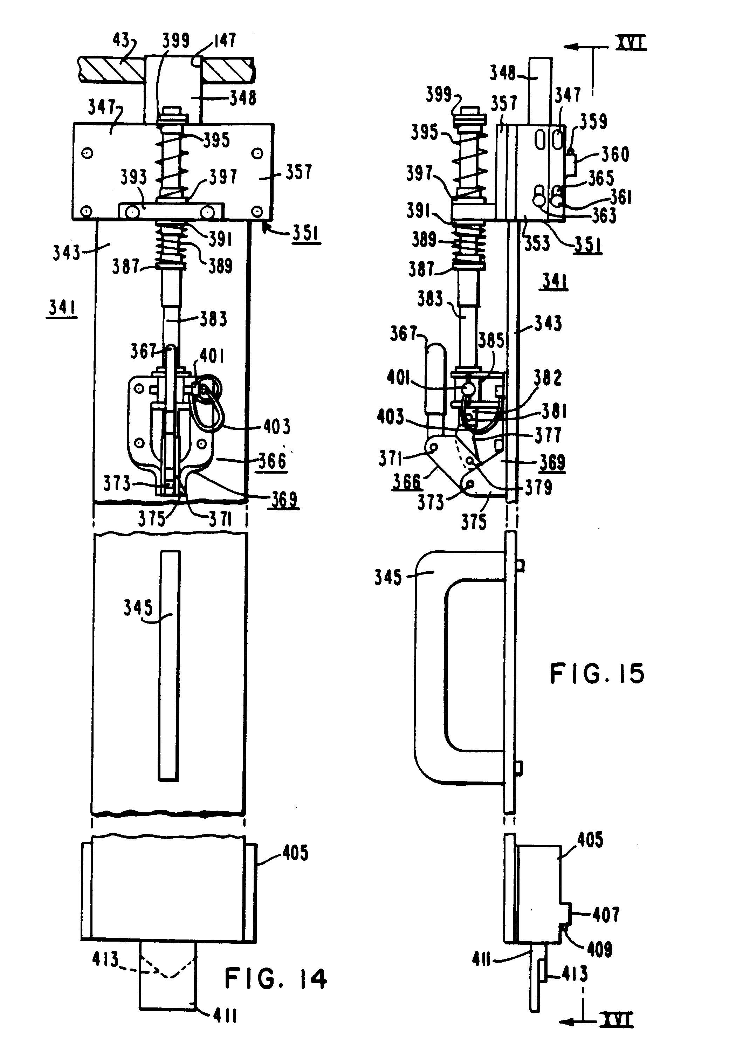

The turret 25 (Fig. 1) includes a cylinder 111. Flanged end caps 113 and 115 are secured to the upper and lower ends of cylinder 111 by a plurality of uniformly spaced spring pins 117. The upper end cap has a central shouldered extension 119 in whose shoulder the upper thrust bearing 55 is secured. The lower end cap 115 has a shouldered opening in whose shoulder the lower thrust bearing 121 is secured. When the turret 25 is positioned in the apparatus, the inner race 123 of bearing 121 engages a shoulder on the lower pivot 125. A plate 127 is secured to the lower end of the lower end cap 115 engaging a shoulder depending from the lower end. The plate 127 has a spherical groove which is engaged by a ball (not shown) in a spring-activated plunger 129 extending from a sleeve 131 secured in the torque arm 133 of the indexing drive-shaft assembly 135. The turret 25 is indexed by the plunger 129 when the torque arm 133 is rotated. Upper and lower index plates or rings 137 and 139 are bolted to the flanges 141 and 143 of the end caps 113 and 115. The bottoms of the index plates are flush with the bottoms of the flanges. A plurality of holes 145 defined by circularly cylindrical arcs are provided in the upper index plate 137. Cavities 147 defined by circularly cylindrical arcs are provided in the lower index plate 139. The cavities 147 in the lower index plate 139 face upwardly. The holes 145 and cavities 147 at each angular position of the turret are coaxial and serve as a receptacle for a sleeve blank 27. Each cavity 147 engages the lower end of a sleeve blank. Slots 149 (Fig. 2) extend through each cavity 147. Slots 150 also extend through each hole 145. The slots are penetrable by the lifting arm 151 of the lifter 29. The lifting arm 151 has a projection 153 which engages the lower end of a sleeve blank 27 in a receptacle 145-147. To facilitate the lifting operation, the lower end of each sleeve blank is flared. The index plates 137 and 139 have holes 155 around their periphery for engagement by the handle assembly 341 (Fig. 14, 15, 16) for handling the turret during installation.

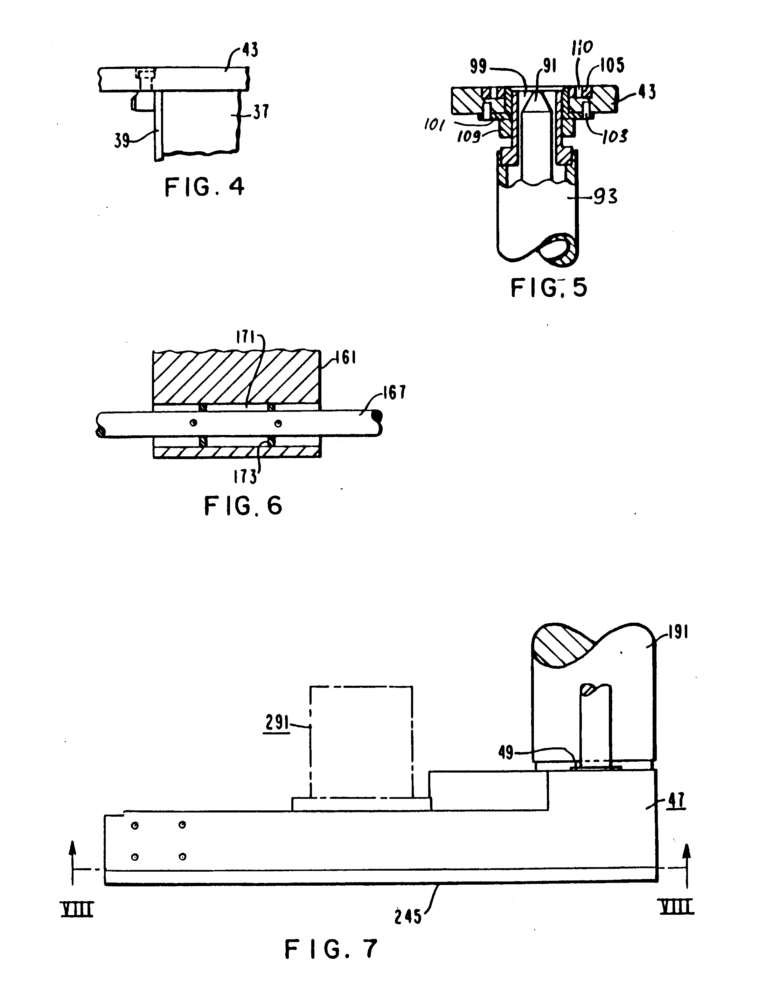

The lifter 29 includes, in addition to the drive screw 81, the bearings 79, the bearing nut 83, and the lifter arm 151, a saddle block or carriage 161 (Figs. 1, 2). The saddle block 161 is hollow and within the saddle block a ball nut 163 is secured to a block 165 connected to the carriage. As the drive screw 81 is rotated in one direction or the other, the ball nut 163 is moved upwardly or downwardly carrying the saddle block 161 with it. The lifter arm 151 is supported from the surface of the saddle block which faces the turret 25. The lifter arm 151 is of generally L-shaped longitudinal cross section with the projection 153 on its horizontal surface. The saddle block 161 is guided by shafts, bars or rails 167. The shafts 167 extend between the upper plate 49 of the gearbox 47 and the top plate 43 of the gear box 47. The shafts 167 are supported by rail supports 169 mounted on the front wall 37 of the framework 23. The saddle block 161 carries ball bushings 171 (Figs. 2, 6) which engage and move along the shafts when the saddle block moves upwardly or downwardly. Each bushing 171 is provided with a seal 173 at each end. The bushings 171 have slots so that they clear the rail supports 169 as the bushings move upwardly or downwardly with the saddle block 161. Limit switches 175, 177 and 179 mounted inwardly along the front plate 37 are actuable by the saddle block 161. When the saddle block is in the lowermost position, it actuates limit switch 175 to indicate that it is in this position. When the saddle block is in the uppermost position, it actuates limit switch 179. When the saddle block is in a position such that the sleeve blank 27 has just entered the tube 31 to be sleeved, it actuates limit switch 177. Typically, limit switches 175, 177, 179 are microswitches which are closed by engagement with the saddle block 161 and reopen automatically when disengaged.

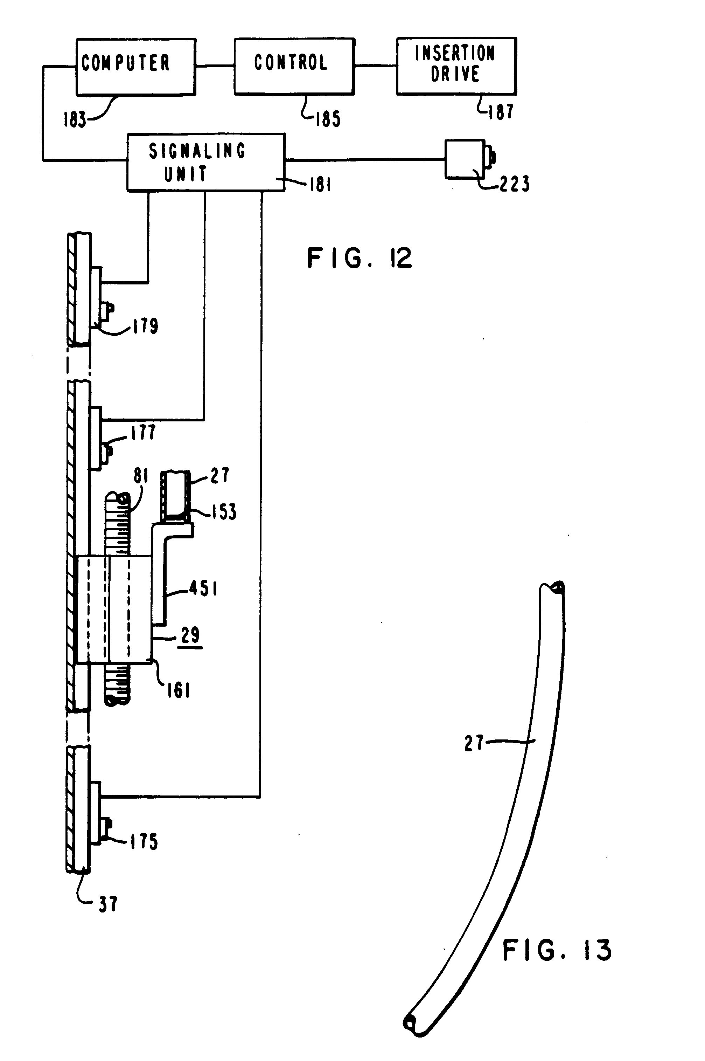

The limit switches 175, 177, 179 are connected to a signalling unit 181 (Fig. 12) which transmits intelligence as to the position of the saddle block 161 and sleeve blank 27 which it carries to a computer 183. Through a control 185, the computer 183 sets the insertion drive 187 to operate in dependence upon the position of the saddle block. At the start of an advance of a sleeve blank, the insertion speed is low so that the sleeve blank 27 is advanced at a low speed. When limit switch 177 is actuated, indicating entry of the sleeve blank into tube 31, the speed of the insertion drive 187 is increased substantially increasing the speed of insertion. When the limit switch 179 is actuated, the insertion drive is stopped and after a short delay, reversed. When switch 177 is actuated on the retraction stroke, the speed of the insertion drive 187 is reduced.

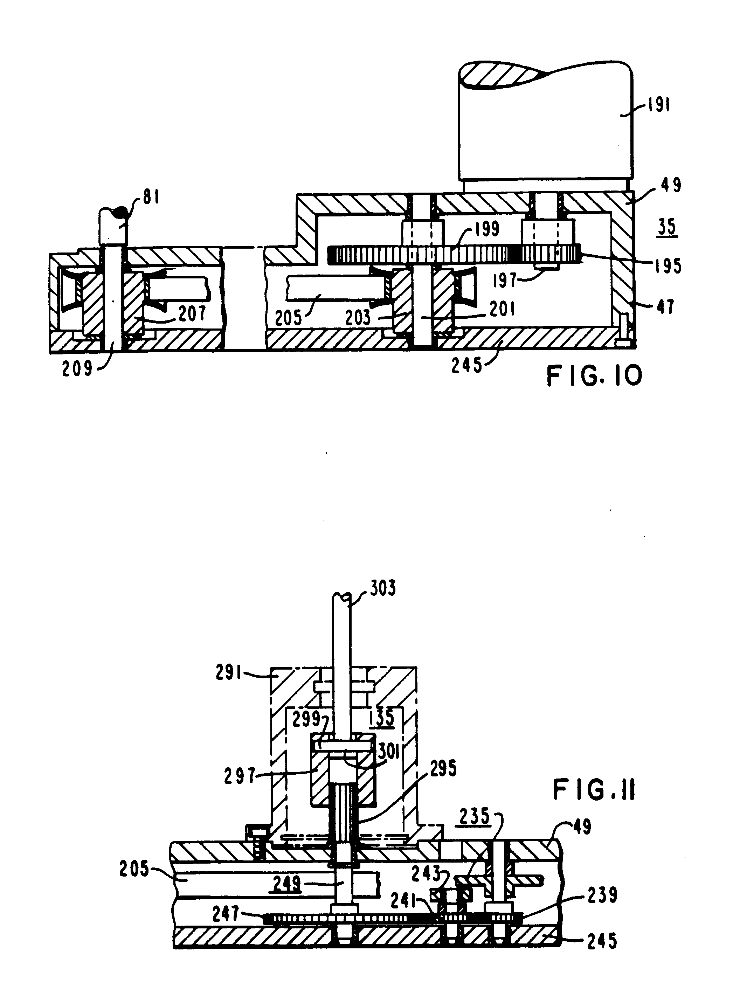

The drive 35 includes, in addition to the indexing shaft assembly 135, the torque arm 133 and the sleeve 131 and plunger 129, a sleeve-blank insertion motor 191 and an indexing motor 193 (Figs. 1, 2, 7-11). The motors 191 and 193 are mounted on the top cover 49 of the gearbox 47. The sleeve-blank insertion motor 191 drives a pinion 195 through its shaft 197. The pinion 195 meshes with a speed reducing gear 199 on whose shaft 201 a sprocket sheel 203 is mounted. A timing belt 205, driven by sprocket wheel 203, drives the drive screw 81 through a sprocket wheel 207 keyed to the shaft 209 of drive screw 81. Typically, the speed of the motor 191 is varied by varying the voltage impressed on this motor. Typically, with a voltage of 20 volts impressed on the motor, the sleeve blank is advanced at a velocity of 50 mm (2") per second and with 40 volts on the motor 191, the sleeve blank is advanced at 90 mm (3.6") per second.

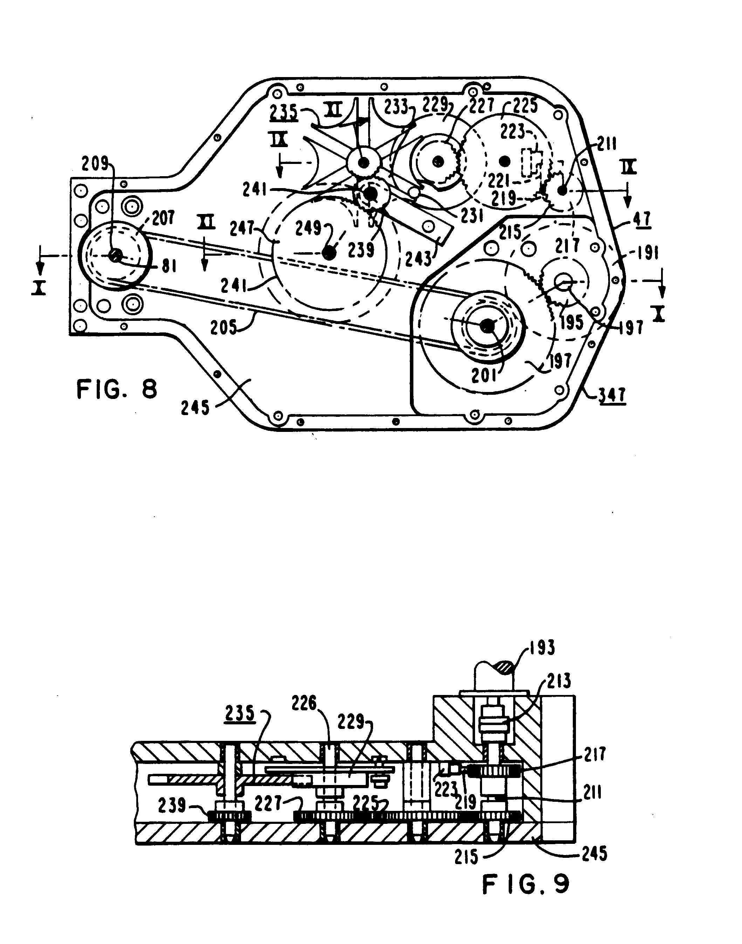

A shaft 211 is driven by the indexing motor 193 through a multi-jaw coupling 211. The shaft 213 drives a pinion 215 and a cam 217. The cam has a flat surface over about 135° of its circumference (Flg. 8) and a cylindrical surface over the remainder of its circumference. The cam is engaged by a cam follower 219 on the switch arm 221 of a limit switch 223 suspended from the bottom of top plate 49 of the gearbox 47. When the cam follower 219 engages the flat surface, the arm 221 is moved counterclockwise closing the switch. When the cam follower is in the cylindrical part of the cam surface, the arm 221 is pivoted clockwise and the switch is open. The pinion 215 meshes with an idler gear 225. The idler gear 225 drives a gear 227 at the same speed of rotation as the pinion 215.

The cam 229 of the Geneva movement 231 is on the shaft 226 of gear 227. The cam 229 carries a pin 231 which, as the cam rotates, engages successively in the slots 233 of the star gear 235 of the Generva movement indexing the star gear. On the shaft 237 of the star gear 235 there is a pinion 239 which meshes with an idler gear 241. The idler gear 241 is supported on a bracket 243 secured to the base 245 of the gearbox. The idler gear 241 meshes with a speed-reducing gear 247 which drives a shaft 249. The shaft 249 drives the indexing shaft assembly 135. The train of gears 215, 225, 227, 235, 241 and 247 are such that the shaft 249 is indexed one step for each complete rotation of gear 215 and cam 217. Limit switch 223 is actuated once for each indexing step of the shaft 249 and the turret 25. Actuation of the switch 223 transmits intelligence to computer 183 that an indexing operation has been completed. The shaft 249 is centered under the insertion position of the turret 25.

The index shaft assembly 135 (Figs. 1, 11) includes a circularly cylindrical flanged housing 291. The housing is seated on the top plate 49 of the gearbox 47 with its heel-like projection engaging a circular shoulder in the surface of top 49. The shaft 249 passes through a bearing 293 in the top 49 and terminates in a splined extension 295 which extends into the housing 291. The extension 295 is engaged by a splined bushing 297. The splined bushing 297 is connected by a pin 299 to the splined extension 301 of a shaft 303. The lower pivot 125 is secured to the top of shaft 303 by a central screw 305. The torque arm 133 is split at the end remote from the sleeve 131 and is clamped to the top of shaft 303 by screw 307. The assembly 135 also includes a piston 309. The shaft 303 extends through bushings 297 in a central opening in the piston 309. The upper surfaces of the bushing 297 and of the splined section 301 are flush and they abut a spacer 313 abutting the inner surface of the flange 315 of the piston 309. There are O-ring seals 317 and 319 between the stem 319 of the piston and the inner surface of the top of housing 291 and between a peripheral slot 321 in the piston 309 and the lower wall of the housing 291. The piston 309 is urged upwardly by a spring 323 which is compressed between a shouldered annulus 325 supported on a ring 327 secured near the bottom of the inner wall of housing 291 and the bottom surface of the piston 309. The upper turn of the spring 323 is seated in the annular space between an annular tip of the piston and the outer surface of the splined bushing 297. Under the upward force of spring 323, the piston 309 maintains the parts connected to it, including the shaft 303 and its splined section 301, the bushing 297, the torque arm 133, the plunger 129 and the lower pivot 125 in the uppermost position. The pivot 125 is urged into firm locked engagement with thrust bearing 121 securing the turret 25 in its operating position. The upward force of the spring 323 is counteracted by compressed air supplied through fitting 327, conductor 329 and nozzle 331 to the top of the flange 315 of the piston. Fitting 327 is supported on angle bracket 97. When the compressed air is supplied, the force of spring 323 is counteracted and the piston 309 and the parts connected to it are moved downwardly disconnecting lower pivot 125 from thrust bearing 121 so that the turret 25 may be readily removed. When the compressed air is interrupted, the piston 309 and the parts connected to it snap upwardly and the pivot 125 is snapped into firm engagement with the thrust bearing 121 of a turret 25 which is positioned for operation. The indexing shaft indexes the turret through splined bushing 297, splined section 301, torque arm 133, plunger 129 and plate 127.

The handle assembly 341 (Fig. 14, 15, 16) is attached to a turret 25 loaded with sleeve blanks 27. As so loaded, it is handed to the attendant in the channel head of the steam generator to be sleeved. The attendant uses the handle assembly 341 to position the turret 25 in the cartridge sleeve-blank loader 21. Once the turret is properly positioned, it is locked and the handle assembly is removed.

The handle assembly 341 includes a supporting plate 343. A handle 345 is secured longitudinally of the plate 343 in a position where the handle may be readily grasped to manipulate the turret 25. There may be several handles but only one is shown in the drawings.

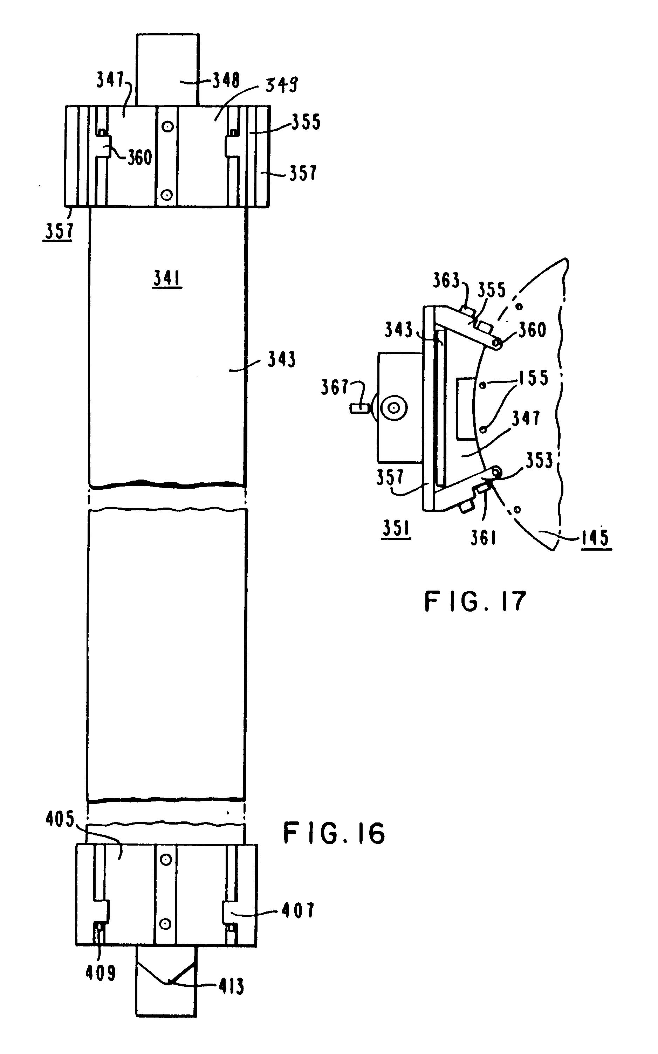

At the left-hand end of the handle assembly 341, as seen in Figs. 14, 15, 17, a yoke 347 is secured to plate 343. The inner surface 349 (Fig. 16) of the yoke 347 has the contour of an arc of a circle having a slightly greater radius than the periphery of the upper index plates 145 so that it seats snugly against this plate. A top key 348 extends from the yoke 347. A slide assembly 351 is bolted to the inclined sides of the yoke 347. The slide assembly 351 includes two end slides 353 and 355 connected by a tie plate 357. Each of the slides 353 and 355 has a pin 359 extending from a projection 360 at its outer end. The pins 359 are sometimes referred to and may be described as plungers. The bolts 361 and 363 which join the slide assembly 351 to the yoke 347 pass through slots 365 (Fig. 15) in the slides so that the slide assembly is slidable relative to the yoke 347. The slide assembly 351 is slid longitudinally of plate 343 by operation of a mechanism 366 including a handle 367. The handle 367 is sometimes referred to as a plunger clamp since it clamps the plungers 359 in advanced and retracted positions. Handle 367 operates through a linkage mounted on bracket 369 secured to plate 343. A pair of parallel plates 371 extending from the inner end of handle 367 are pivotal about a pin 373 secured between parallel arms 375 of bracket 369. A lever 377 is pivotal near one end on a pin 379 extending between plates 371. Near the other end this lever 377 is pivotal on a pin 381 secured to the bifurcated end 382 of a shaft 383. The shaft is slidable in a bearing 385 extending from bracket 369. At its outer end the shaft 383 carries a retainer 387 for a spring 387. The spring 389 is compressible by the shaft 383 between the retainer 387 and a retainer 391 which is secured to a spring support 393 connected to tie plate 357. The shaft 383 passes through the retainer 391, the spring support 393 and through a second spring 395. The second spring 395 extends between retainer 397, secured to the spring support 393 on the face opposite to the retainer 391, and retainer 399. With the handle 367 in its most clockwise position with reference to Fig. 15, the slide assembly 351 is in its most advanced left-hand position on yoke 347 with reference to Fig. 15, and the pins 359 on the slides 353 and 355 are extended. With the handle 367 rotated to its most counterclockwise position with reference to Fig. 15, the slide assembly 351 is retracted to the right and the pins 359 are retracted. The springs 389 and 395 are so-related that the shaft 383 passes through dead center in its advanced or retracted positions. The shaft 383 and the slide assembly 351 connected to it are locked in their extreme positions by a pin 401 connected to a cable 403 extending from bracket 369.

At its other end, support plate 343 carries a block 405 having projections 407 from which pins 409 extend. A key 411 extends from the end of block 405. Displaced from the end of the key 411, there is a V-projection 413 shaped to seat in the V-groove 48 of one of the handles 46. The block 405 is shaped, similarly to the yoke 347, so that it seats against the periphery of the lower index plate 147.

In the practice of this invention, the handle assembly is connected to a turret 25 carrying sleeve blanks 27 in its receptacles. The circular arcuate surface (not shown) of the block 405 is seated against the coaxial circular surface of the lower index plate 139 and the pins 409 are inserted in holes 155 along the periphery of the index plate 139. Typically, the two pins 409 are inserted in the two end holes of a sequence of four holes. Initially, the handle 367 is locked in the most counterclockwise position, with reference to Fig. 15. Once the pins 409 are seated in the holes 155 of the lower index plate 139, the handle assembly 341 is swung to the position in which the surface 349 is seated in the circular rim of the upper index plate 137 with the pins or plungers 359 aligned with the first and the fourth holes 155 of a sequence of four holes. The shaft 383 is now unlocked by removal of the pin 401 from the bearing 385 and the handle 367 is turned in a clockwise direction injecting the pins or plungers 359 in the two holes 155 of the index plate at the ends of a sequence of four. The pin 401 is inserted in bearing 385 to lock the handle assembly 341 in the position in which it is mounted on the sleeve-blank loaded turret 25. The loading of turret 25 and the mounting of the handle assembly takes place outside of the channel head of the steam generator.

The attendant now enters the channel head. By setting the valve 415 (Fig. 1) in the open position, the attendant applies compressed air to piston 315. The piston 315 and the shaft 303, the torque arm 133 and the lower pivot 125 are retracted. The unloaded turret 25 is readily removable and is removed by the attendant and given to personnel outside of the channel head. The valve 415 is left in the open setting. The personnel outside of the channel head now give the loaded turret to the attendant. Grasping the handle 345, the attendant inserts to top key in a slot 417 (Fig. 14) in the top plate of the sleeve-blank loader 21, engages the bottom key 411 with the side of the handle 46 (Fig. 2) just below the slot 417 and seats the projection 413 in the V-notch 48 of the handle 46. Slots 417 are associated with the handles 46 on both sides of the sleeve-blank loader 21 (Fig. 2) so that the handle assembly 341 may be mounted either on the left or on the right, with reference to Fig. 2 of the loader 21. This is a significant feature because it gives the attendant flexibility to enable him to manipulate the handle assembly 341 on the right or left of the loaded turret. This flexibility is necessary because of the space limitations in the channel head which is in the shape of a spherical dome. After the turret 25 is positioned in the sleeve-blank loader as just described, the attendant closes valve 415 disconnecting the compressed air. Under the action of spring 323, the lower pivot 125 is snapped into bearing 121 locking the turret firmly in the loader 21. The attendant then swings the handle 367 to the most counterclockwise position and removes the handle assembly. The attendant now leaves the channel head and the sleeving proceeds automatically. The time spent within the channel head by the attendant in completing his task is typically about 75 seconds.

While a preferred embodiment and preferred practice of this invention have been disclosed herein, many modifications thereof are feasible. This invention is not to be restricted except insofar as may be necessitated by the spirit of the prior art.

## Claims

1. Apparatus for sleeving a plurality of damaged vertical tubes of a steam generator of a nuclear-reactor plant, the said apparatus including means for advancing and inserting a sleeve blank (27) into an open end of one of said tubes (31), characterized in that said apparatus includes a turret (25) replaceably mounted in said apparatus and rotatable about a vertical axis and having a plurality of receptacles (145, 147) for receiving sleeve blanks (27) to be inserted in each of said tubes as sleeves; lifting means (161, 151) associated with at least one of said receptacles, said lifting means including an arm (151) to engage a lower end of a vertical sleeve blank in said receptacle and also including drive means (81) for raising said arm after it has been engaged to said sleeve blank and for inserting said sleeve blank as a sleeve in one of said vertical tubes; and means (135) for indexing said turret during its rotation so that each receptacle in its turn is successively moved into position to be associated with said lifting means as aforesaid whereby a sleeve blank in each successive receptacle can be inserted by said lifting means in a chosen one of said tubes.

2. The apparatus of claim 1, characterized in that said indexing means (135) includes a Geneva wheel movement (235) whereby successive of receptacles (145, 147) each in its turn is precisely positioned to be raised and inserted in a tube by said lifting means (151, 161).

3. The apparatus of claim 1 or 2, characterized by means responsive to the lifting means (151, 161) when said lifting means is in the starting position, for indicating that said lifting means is in the starting position, the apparatus also including means responsive to the lifting means when said lifting means reaches its most advanced position with the sleeve blank fully inserted in the tube, for indicating that said lifting means has reached said most advanced position.

4. The apparatus of claims 1, 2 or 3, characterized in that said wherein the drive means (81) includes means for varying the speed of said lifting means (151, 161) as it advances a sleeve blank (27), said speed varying means maintaining the said speed at a lower magnitude such as to preclude damage to the sleeve blank by contact with the tube sheet as the lifting means advances the sleeve blank from its initial position, and means, responsive to the lifting means when it reaches a position at which the sleeve blank which it advances enters a tube, for actuating said varying means to increase the speed of said lifting means.

5. The apparatus of any of claims 1 to 4, characterized by means for mounting the turret (25) in the apparatus so that it is readily removable and replaceable.

6. The apparatus of any of claims 1 to 5, characterized by means to be connected to said turret (25), for mounting said turret in sleeve-insertion position, said mounting means having selectively operable means for locking said turret in a sleeve-insertion setting and for unlocking said turret from said sleeve-insertion setting, said mounting means also including means to be connected to said turret for indexing said turret when locked in sleeve-insertion setting to index sleeve blanks to a sleeve-insertion position; and including a handle assembly (341) including means cooperative with said turret for supporting said turret on said handle assembly, said handle assembly also including means cooperative with said mounting means, while said turret-locking-and-unlocking means is in unlocked setting, for positioning said supported turret in said mounting means to be locked in sleeve-insertion setting and to be indexed.

**Revendications**

1. Appareil de chemisage d'un certain nombre de tubes verticaux endommagés d'un générateur de vapeur de centrale nucléaire, cet appareil comprenant des moyens permettant de faire avancer et d'introduire un élément de chemise neuf (27) dans une extrémité ouverte de l'un des tubes (31), appareil caractérisé en ce qu'il comprend une tourelle (25) montée de manière à pouvoir être remplacée dans l'appareil et pouvant tourner autour d'un axe vertical, cette tourelle comportant un certain nombre de logements (145, 147) destinés à recevoir des éléments de chemise neufs (27) devant être introduits dans chacun des tubes pour former des chemises; des moyens de levage (161, 151) associés à l'un au moins des logements, ces moyens de levage comprenant un bras (151) destiné à engager l'extrémité inférieure d'un élément de chemise vertical dans son logement, et comprenant également des moyens d'entraînement (81) destinés à soulever le bras après qu'il se soit engagé sur l'élément de chemise, et pour introduire l'un des éléments de chemise de manière à chemiser l'un des tubes verticaux; et des moyens (135) de positionnement de la tourelle pendant sa rotation de façon que chaque logement soit successivement amené à son tour en place pour être associé aux moyens de levage comme décrit ci-dessus, ce qui permet ainsi à un élément de chemise placé dans chacun des logements successifs, d'être introduit par les moyens de levage dans l'un, choisi, des tubes.

2. Appareil selon la revendication 1, caractérisé en ce que les moyens de positionnement (135) comprennent un mouvement à roue de Genève (235), de façon que les logements successifs (145, 147) soient positionnés chacun leur tour avec précision pour être soulevés et introduits dans un tube par les moyens de levage (151, 161).

3. Appareil selon l'une quelconque des revendications 1 et 2, caractérisé en ce qu'il comprend des moyens répondant aux moyens de levage (151, 161), lorsque les moyens de levage sont dans la position de départ, pour indiquer que ces moyens de levage sont dans cette position de départ, l'appareil comprenant également des moyens répondant aux moyens de levage, lorsque les moyens de levage atteignent leur position la plus avancée et lorsque l'élément de chemise est complètement introduit dans le tube, pour indiquer que ces moyens de levage ont atteint cette position la plus avancée.

4. Appareil selon l'une quelconque des revendications 1 à 3, caractérisé en ce que les moyens d'entraînement (81) comprennent des moyens permettant de faire varier la vitesse des moyens de levage (151, 161) lorsqu'ils font avancer un élément de chemise neuf (27), ces moyens de variation de vitesse maintenant la vitesse à une valeur faible pour éviter d'endommager l'élément de chemise par contact avec la nappe de tubes lorsque les moyens de levage font avancer l'élément de chemise à partir de sa position initiale, et des moyens, répondant aux moyens de levage lorsqu'ils atteignent une position pour laquelle l'élément de chemise ayant avancé pénètre dans un tube, pour actionner les moyens de variation de manière à augmenter la vitesse des moyens de levage.

5. Appareil selon l'une quelconque des revendications 1 à 4, caractérisé en ce qu'il comprend des moyens de montage de la tourelle (25) dans l'appareil de façon qu'on puisse la retirer et la remplacer facilement.

6. Appareil selon l'une quelconque des revendications 1 à 5, caractérisé en ce qu'il comprend des moyens devant être reliés à la tourelle (25) pour monter cette tourelle dans une position d'introduction de chemise, ces moyens de monture comportant des moyens manoeuvrables sélectivement pour verrouiller la tourelle dans une position de réglage d'introduction de chemise, et pour déverrouiller cette tourelle de sa position de réglage d'introduction de chemise, ces moyens de monture comprenant également des moyens devant être reliés à la tourelle pour positionner cette tourelle, lorsqu'elle est verrouillée dans sa position de réglage d'introduction de chemise, de manière à positionner les éléments de chemise neufs dans une position d'introduction de chemise; et un dispositif de manoeuvre (341) comprenant des moyens pouvant coopérer avec la tourelle pour supporter cette tourelle sur le dispositif de manoeuvre, ce dispositif comprenant également des moyens pouvant coopérer avec les moyens de monture, lorsque les moyens de verrouillage et de déverrouillage de la tourelle sont réglés en position de déverrouillage, pour positionner la tourelle supportée par les moyens de monture de façon qu'elle soit verrouillée dans la position de réglage d'introduction de chemise, et de façon qu'elle soit convenablement positionnée.

**Patentansprüche**

1. Vorrichtung zum Vermuffen einer Mehrzahl beschädigter vertikaler Rohre eines Dampferzeugers einer Kernreaktoranlage, wobei die Vorrichtung Mittel zum Vorschub und Einsetzen eines Muffenrohlings (27) in ein offenes Ende eines der Rohre (31) aufweist, dadurch gekennzeichnet, daß die Vorrichtung einen Revolverkopf (25) aufweist, der austauschbar an der Vorrichtung montiert und um eine vertikale Achse drehbar ist sowie eine Mehrzahl von Aufnahmen (145, 147) zur Aufnahme von Muffenrohlingen (27) aufweist, die in jedes der genannten Rohre als Muffen einzusetzen sind, weiter Hubmittel (161, 151) aufweist, die mindestens einer der genannten Aufnahmen zugeordnet sind und einen Arm (151) zum Erfassen des unteren Endes eines vertikalen Muffenrohlings in der betreffenden Aufnahme sowie Antriebsmittel (81) zum Anheben des Arms nach dem Erfassen des genannten Muffenrohlings und zum Einsetzen dieses Muffenrohlings als Muffe in eines der vertikalen Rohre aufweist, und schließlich Mittel (135) zum Indexieren des Revolverkopfes während seiner Drehung aufweist, so daß aufeinanderfolgend jede Aufnahme in die entsprechende Relativposition mit Bezug auf die vorgenannten Hubmittel bewegt wird, derart, daß der Muffenrohling der aufeinanderfolgenden Aufnahmen mittels der Hubmittel jeweils in ein gewähltes Rohr einsetzbar ist.

2. Vorrichtung nach Anspruch 1, dadurch gekennzeichnet, daß die Indexiermittel (135) ein Sternradgetriebe (235) aufweisen, mittels welchem aufeinanderfolgende Aufnahmen (145, 147) jeweils präzise positioniert werden, um den Muffenrohling mittels der Hubmittel (151, 161) anheben und in ein Rohr einführen zu können.

3. Vorrichtung nach Anspruch 1 oder 2, dadurch gekennzeichnet, daß auf die in der Startposition stehenden Hubmittel (151, 161) ansprechende Mittel zur Anzeige der Stellung der Hubmittel in der Startposition vorgesehen sind und daß die Vorrichtung außerdem auf die in ihrer Endausfahrstellung mit vollständig in das Rohr eingeführtem Muffenrohling befindlichen Hubmittel ansprechende Mittel zur Anzeige des Erreichens der Ausfahrendstellung der Hubmittel aufweist.

4. Vorrichtung nach Anspruch 1, 2 oder 3, dadurch gekennzeichnet, daß die Antriebsmittel (81) Mittel zur Veränderung der Geschwindigkeit der Hubmittel (151, 161) beim Vorschub eines Muffenrohrlings (27) aufweisen, wobei diese Geschwindigkeitsveränderungsmitteldie Geschwindigkeit, solange die Hubmittel den Muffenrohrling aus seiner Anfangsstellung vorschieben, auf einem niedrigen Wert halten, um eine Beschädigung des Muffenrohlings durch Berührung mit dem Rohrboden zu vermeiden, und Mittel aufweisen, die auf die Hubmittel ansprechen, wenn diese eine Position erreichen, bei welcher der vorgeschobene Muffenrohrling in ein Rohr eintritt, und die die Geschwindigkeitsveränderungsmittel dann im Sinne einer Steigerung der Geschwindigkeit der Hubmittel betätigen.

5. Vorrichtung nach einem der Ansprüche 1 bis 4, gekennzeichnet durch Mittel zur leicht herausnehmbaren und austauschbaren Montage des Revolverkopfes (25) in der Vorrichtung.

6. Vorrichtung nach einem der Ansprüche 1 bis 5, gekennzeichnet durch mit dem Revolverkopf (25) zu verbindende Mittel zur Montage des Revolverkopfes in einer Muffeneinführposition, wobei diese Montagemittel selektiv betätigbare Mittel zur Arretierung des Revolverkopfes in einer Muffeneinführstellung und zum Lösen des Revolverkopfes aus dieser Muffeneinführstellung und außerdem mit dem Revolverkopf zu verbindende Mittel zum Indexieren des Revolverkopfes, wenn dieser in der Muffeneinführstellung zum Indexieren von Muffenrohlingen in einer Muffeneinführposition arretiert ist, und durch eine Griffbaugruppe (341) mit dem Revolverkopf zusammenwirkende Mittel zur Halterung des Revolverkopfes an der Griffbaugruppe aufweisen, wobei die Griffbaugruppe ihrerseits mit den Montagemitteln zusammenwirkende Mittel aufweisen, um den gehalterten Revolverkopf, während die Revolverkopfarretier- und -Lösemittel sich in der Lösestellung befinden, in den Montagemitteln zur Arretierung in der Muffeneinführstellung und zum Indexieren positionieren.

FIG. 1

FIG. 2

FIG. 2 A

FIG. 3

FIG. 4

FIG. 5

FIG. 6

FIG. 7

FIG. 8

FIG. 9

14

FIG. 10

FIG. 11

COMPUTER

CONTROL

INSERTION DRIVE

183

185

187

SIGNALING UNIT

181

223

FIG. 12

179

177

81

27

153

451

29

161

175

37

27

FIG. 13

FIG. 14

FIG. 15

EP 0 299 539 B1

FIG. 16

FIG. 17